Europäisches Patentamt

European Patent Office

Office européen des brevets

(19)

(11) Numéro de publication: **0 269 518**
**B1**

(12) **FASCICULE DE BREVET EUROPEEN**

(45) Date de publication du fascicule du brevet: **23.01.91**

(21) Numéro de dépôt: **87402622.2**

(22) Date de dépôt: **19.11.87**

(51) Int. Cl.⁵: **B 60 P 3/025**

(54) **Véhicule formant un espace développable en forme de conque.**

(30) Priorité: **20.11.86 FR 8616350**
**19.05.87 FR 8707105**

(43) Date de publication de la demande:
**01.06.88 Bulletin 88/22**

(45) Mention de la délivrance du brevet:
**23.01.91 Bulletin 91/04**

(84) Etats contractants désignés:
**AT BE CH DE ES FR GB GR IT LI LU NL SE**

(56) Documents cités:
**BE-A- 896 948**
**DE-U-8 323 494**
**FR-A- 902 131**
**US-A-3 217 366**

(73) Titulaire: **CARROSSERIE SORIN (Société à Responsabilité Limitée)**
**Zone Industrielle de Mouzillon**
**F-44330 Vallet (FR)**

(72) Inventeur: **Sorin, Jean-Marc**
**Le moulin du Douaud**
**Mouzillon§F-44330 Vallet (FR)**

(74) Mandataire: **Berogin, Francis et al**
**CABINET HARLE & PHELIP 21, rue de la Rochefoucauld**
**F-75009 Paris (FR)**

Courier Press, Leamington Spa, England.

## Description

La présente invention concerne un véhicule formant un espace développable en forme de conque et plus particulièrement un véhicule destiné à servir de support à des spectacles en tous genres, festivals, concerts et autres festivités.

Il est connu de réaliser de tels véhicules, qui permettent l'implantation très rapide d'une infrastructure suffisante pour l'accueil d'un groupe musical ou encore d'une troupe de théâtre.

Ainsi par exemple dans le brevet US—A—3.217.366, il est décrit un kiosque à musique ambulant, tractable par un véhicule léger, constitué d'un plancher central muni de plusieurs gradins, et de plusieurs portions de planchers, mobiles, pouvant s'adapter soit devant le plancher central, pour le prolonger vers l'avant, toujours en forme de gradins, soit se positionner sur lesdits gradins du plancher central et former ainsi un plancher parfaitement horizontal sur cette même partie centrale. Il comporte encore un auvent qui, en position repliée, verticale, constitue l'une des parois du kiosque. Les autres parois du kiosque, les parois latérales, le fond et le toit, sont fixes. Un tel kiosque présente l'avantage une mise en oeuvre très rapide mais son inconvénient réside dans l'exiguïté de ses possibilités en matière de surface plane. Celle-ci se résume à la simple partie centrale du véhicule, lorsque toutes les portions de plancher complémentaires sont posées à l'intérieur sur les gradins du plancher central.

On connait également un véhicule qui permet d'obtenir une plus grande surface horizontale. Ce véhicule est décrit dans le document DE—A—2.420.504 et il comprend une structure centrale formant plancher, sur laquelle est disposée une seconde structure coulissante, transversalement, pour réaliser un quasi doublement de la surface de base. La structure de base comporte un toit relevable, de même que la structure complémentaire. Un tel dispositif présente cependant une certaine complexité, pour la mise en place des glissières permettant la translation de l'élément complémentaire et pour les systèmes de relevage des toits.

La présente invention a pour objet de remédier aux inconvénients des aménagements connus en permettant notamment le développement d'une structure de grande surface en un temps très court, au moyen d'une seule personne. L'invention a également pour objet d'aboutir à un véhicule qui, une fois développé, va procurer une grande efficacité acoustique grâce à sa forme s'apparentant à celle d'une conque.

L'invention permet encore, dans un mode particulier de réalisation, de faciliter grandement le développement de la structure et en particulier de réduire les efforts de mise en place du toit relevable.

Le véhicule selon l'invention comprend un châssis central allongé, muni d'un toit relevable sur lequel est articulé un auvent qui constitue, en position fermée, une partie de la paroi latérale du véhicule; il comporte un coffre articulé au niveau de l'arête longitudinale latérale du plancher central, constitué d'une paroi formant, lorsque le coffre est rabattu sur ledit plancher central, une partie de la paroi latérale du véhicule, à l'opposé de celle formée par l'auvent, et, lorsque le coffre est en position basculée de 90° par rapport à sa position rabattue sur le plancher central, ladite paroi forme le plancher de la partie prolongeant latéralement ledit plancher central.

Selon l'invention, le coffre basculant comporte, en plus de sa partie constituant un prolongement du plancher central, quatre côtés prolongeant et fermant latéralement les parois de la partie centrale du véhicule.

Selon une disposition préférentielle de l'invention, le coffre est manoeuvré au moyen d'un vérin disposé entre son plancher et un poteau de soutien du système de relevage du toit couvrant la partie centrale du véhicule.

Selon une autre disposition de l'invention, le toit du véhicule, soutenu par des poteaux télescopiques, se relève au moyen de vérins agissant directement sur les coulisseaux des poteaux télescopiques disposés à l'avant et à l'arrière du véhicule.

Selon une disposition préférentielle, le relevage du toit s'effectue au moyen de deux vérins seulement et au moyen de câbles de traction avec poulies de renvoi, réunissant les coulisseaux disposés respectivement en partie avant et en partie arrière dudit véhicule.

Selon un mode particulier de réalisation de l'invention, le véhicule comporte des moyens qui associent le relevage du toit et le basculement de la paroi latérale formant le plancher avant, dans le prolongement du plancher central, du côté de l'auvent dudit toit.

Le relevage du toit s'effectue au moyen d'un vérin, disposé dans chaque paroi latérale à l'extrémité du plancher central; chaque vérin se situe de préférence entre les coulisseaux des poteaux télescopiques qui soutiennent, à chaque extrémité du plancher central, le toit du véhicule; chaque coulisseau entraine, dans son mouvement, un câble disposé entre son pied et un crochet amovible solidaire de la paroi latérale formant le plancher avant.

Selon une autre disposition de l'invention, la paroi latérale du véhicule, disposée entre le plancher central et l'auvent en position repliée, est constituée d'un panneau articulé sur l'arête longitudinale dudit plancher central, laquelle arête longitudinale est opposée à l'arête d'articulation du coffre. Ce panneau articulé forme un prolongement dudit plancher central.

Selon une autre disposition de l'invention, le plancher avant est constitué de deux panneaux repliables en position verticale pour le transport; le premier panneau est directement articulé sur le plancher central et le deuxième panneau est articulé sur ledit premier panneau, parallèlement à l'articulation du premier sur ledit plancher central.

Toujours selon l'invention, le plancher basculant est renforcé temporairement, longitudinalement, au moyen d'une poutre fixée au niveau de son articulation avec le deuxième panneau, de façon à éviter un flambage trop important lors de la manoeuvre le faisant passer de la position verticale, constituant une paroi latérale du véhicule, à la position horizontale formant le plancher proprement dit; ladite poutre peut être adaptée de façon amovible ou encore être conformée de façon à s'éclipser dans l'épaisseur du plancher.

Toujours selon l'invention, le plancher basculant est soutenu par une structure comprenant, d'une part, des bras coulissants ou repliables qui s'étendent par devant le châssis du véhicule et, d'autre part, des patins fixés sur lesdits bras, au bout desquels sont disposés des pieds réglables en hauteur, lesquels patins servent au support du plancher et à son guidage, lors des manoeuvres.

Selon une autre disposition préférentielle de l'invention, le toit relevable comporte, du côté opposé à l'auvent, un panneau complémentaire avec des côtés latéraux servant de toit au coffre du véhicule; ce panneau complémentaire est articulé sur ledit toit relevable et constitue également la paroi latérale externe du véhicule lorsque le coffre est en position basculée à l'intérieur du véhicule, sur le plancher central, et que le toit est ramené en position basse.

Selon une autre disposition de l'invention, le véhicule comporte des moyens de relevage de la scène et, d'une manière générale, des organes de sécurité qui règlent l'ordre des manoeuvres es différentes parties mobiles déployables.

Selon une autre disposition de l'invention, l'auvent comporte, à son extrémité, une rampe servant de support à des accessoires divers, commes des projecteurs.

L'invention sera mieux comprise à l'aide de la description suivante et des dessins annexés, donnés à titre indicatif, et dans lesquels:

la figure 1 est une vue en perspective du véhicule selon l'invention, totalement développé;

la figure 2 est une vue en perspective, du véhicule selon l'invention, en position totalement refermé pour pouvoir être déplacé sur les voies normales de circulation;

la figure 3 représente de façon schématique, une section transversale du véhicule développé, et fait apparaître les moyens de commande du toit et du coffre notamment;

la figure 4 représente, de façon schématique, le véhicule en position refermée, pour le transport, et fait apparaître les moyens de commande du toit et du coffre notamment;

la figure 5 est une vue partielle de dessus, sans le toit ni l'auvent, montrant le détail des moyens de commande.

la figure 6 est une vue schématique latérale, montrant les principaux organes d'un autre mode de réalisation du véhicule, pour la mise en place du toit, du coffre, et du plancher basculant situé sur l'avant;

la figure 7 est une vue de dessus, selon 2—2, montrant partiellement et de façon simplifiée, la paroi latérale du véhicule, disposée à l'extrémité du plancher central; le coffre est en position repliée sur le plancher central et le plancher basculant avant est en position repliée également;

la figure 8 représente la poutre de renforcement du plancher avant basculant, pour les manoeuvres;

la figure 9 représente, en vue de dessus, l'extrémité de l'auvent du véhicule, en forme de rampe;

la figure 10 représente le système de réglage de la scène en hauteur, en position normale basse, et, en traits mixtes fins, en position haute.

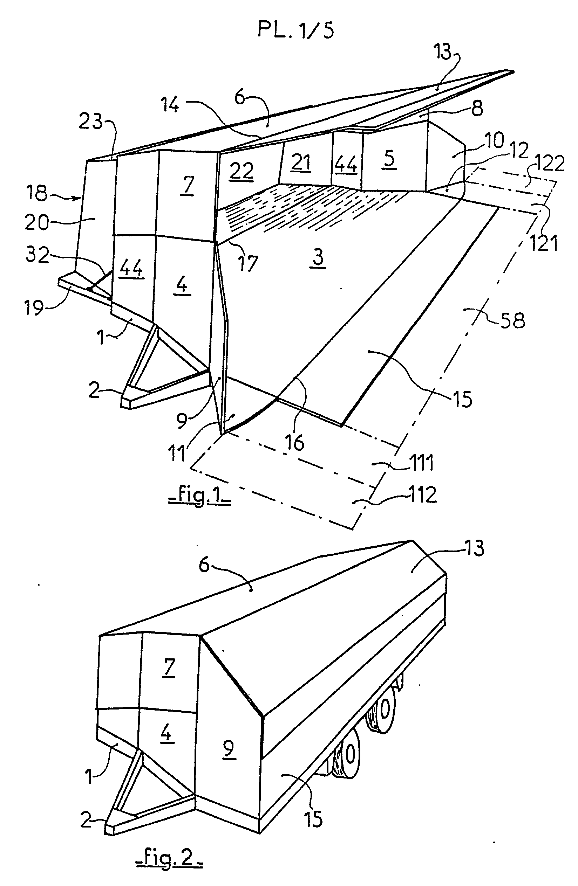

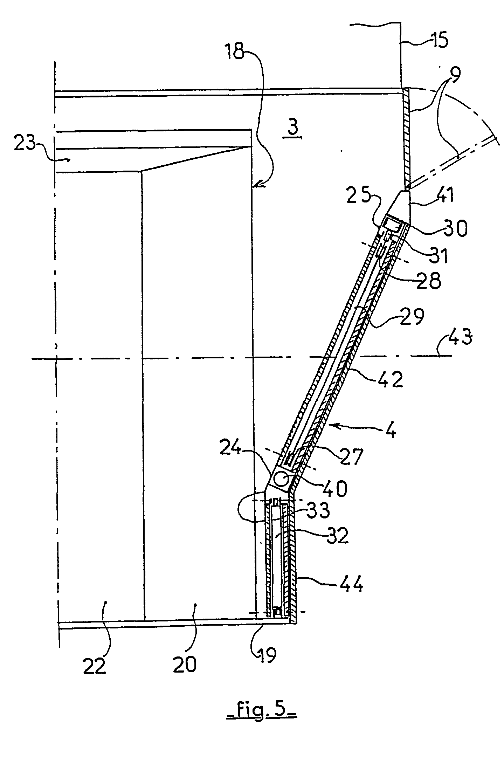

Tel qu'il apparaît figure 1, le véhicule est totalement déployé en forme de conque. Il comprend un châssis de base 1, muni d'une flèche d'attelage 2; le châssis 1 est totalement recouvert par un plancher longitudinal 3 délimité, à chaque extrémité dudit châssis 1, par des parois verticales 4 et 5. La forme générale du plancher 3 est voisine de celle d'un trapèze; les extrémités 44 des parois verticales 4, 5 vers l'arrière du véhicule, sont en effet perpendiculaires aux grands côtés dudit véhicule, chacune sur une longueur correspondant environ à un quart de la largeur totale dudit plancher; cette forme du plancher 3 et des parois, apparaît plus nettement figure 5.

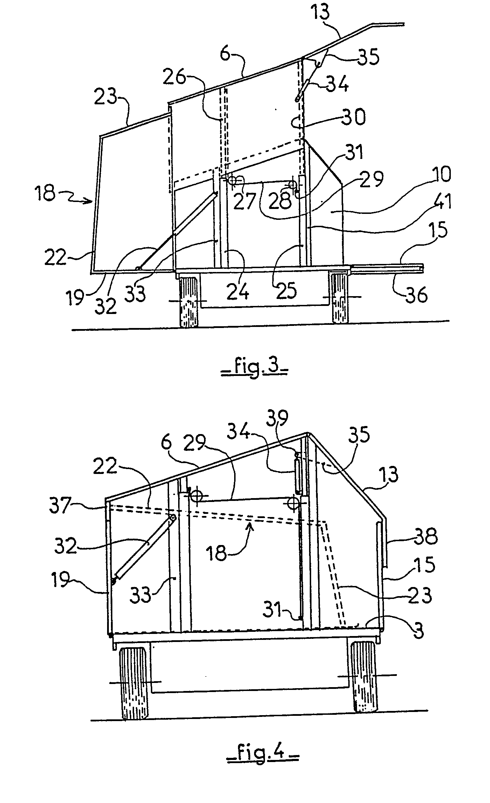

Les parois verticales 4 et 5, à chaque extrémité du plancher 3, soutiennent un toit relevable 6 qui couvre partiellement ledit plancher. Des panneaux complémentaires 7 et 8, solidaires du toit 6, assurent la continuité des parois 4 et 5 respectivement. Le système de relevage du toit 6 sera détaillé plus loin en liaison avec les figures 3 à 5.

Le toit relevable 6 soutient un auvent 13 articulé sur l'arête longitudinale 14. Cet auvent est soutenu par des moyens qui apparaissent figures 3 et 4.

Les parois latérales 4 et 5 s'étenent sur les 3/4 de la largeur des extrémités du plancher 3; la dernière partie de ces extrémités, qui correspond à la partie frontale du plancher, est bordée par des panneaux 9 et 10 pouvant pivoter, selon un axe vertical sur l'arête de chacune desdites parois 4 et 5. On a représenté, à la base de ces panneaux 9 et 10, des secteurs 11 et 12 qui prolongent, latéralement, la partie frontale du plancher 3. Ces secteurs 11 et 12 sont articulés, par tout moyen approprié sur les panneaux 9 et 10, respectivement.

La partie frontale du plancher 3 se prolonge par un panneau 15 articulé sur l'arête longitudinale 16 dudit plancher. Ce panneau 15 constitue un accroissement important de la surface du plancher 3 de base, supérieur à 1/3 de ladite surface.

On a fait apparaître également, en traits mixtes fins, une extension 58 devant le plancher 15, laquelle sera détaillée plus loin, ainsi que des extensions latérales 111, 112, 121, 122, prolongeant à la fois les planchers 15 et 58 et les secteurs 11 et 12.

Le plancher 3 soutient également, articulé autour e l'autre arête longitudinale 17, un coffre 18 constitué d'un plancher 19, de deux côtés latéraux 20, 21, prolongeant respectivement les parois 4 et 5, d'un fond 22, et d'un toit 23, qui prolonge le toit relevable 6. Ce coffre 18 obture totalement le fond du véhicule, en prolongeant la partie centrale constituée par le plancher 3, les parois verticales 4 et 5, le toit 6, et ses prolongements 7 et 8 verticaux. La forme de la surface interne du plancher 19 du coffre 18, est un trapèze.

En position repliée, telle qu'il apparaît figure 2, le véhicule a un encombrement correspondant à un gabarit ordinaire de remorque. Le coffre 18 a disparu; il a été basculé à l'intérieur du véhicule; les bordures de ses parois latérales 20, 21 et du toit 23 sont posées sur le plancher central 3. Le plancher 19 du coffre 18 forme l'une des parois latérales du véhicule; l'autre paroi latérale est formée par le panneau 15 ramené à la verticale contre les panneaux avant et arrière 9 et 10 respectivement. Le toit 6 a été abaissé et son auvent 13 recouvre l'espace correspondant aux panneaux 9 et 10 et prolonge la partie supérieure du panneau 15. Les panneaux 111, 112, 121, 122 sont simplement démontés.

La figure 3 représente le véhicule en position déployée, montrant de façon schématique, les moyens de commande du toit 6 relevable et du coffre 18 basculant, ces moyens étant disposés de chaque côté du véhicule. Le toit 6 est mobile au moyen de poteaux 24 et 25 télescopiques, noyés dans les parois verticales 4 et 5 disposées aux extrémités du plancher 3. Le poteau 24 renferme un vérin qui agit directement sur le coulisseau 26 solidaire du toit 6. Par un un jeu de poulies 27 et 28, et d'un câble 29, le coulisseau 26 entraine le coulisseau 30 solidaire du toit 6 également. Les poulies 27 et 28 sont respectivement solidaires des parties supérieures des coulisses 24 et 25. La coulisse 25 est ouverte sur toute sa hauteur pour permettre le passage du pied d'entrainement 31 du coulisseau 30, au moyen du câble 29.

Le coffre 18 est mis en mouvement par un vérin 32 disposé entre un montant 33 et la bordure du plancher 19, à l'extérieur dudit coffre. Le montant 33 est noyé dans l'épaisseur de chacune des parois verticales 4 et 5, adossé à la coulisse 24.

L'auvent 13 est mobile par rapport au toit 6 au moyen d'un vérin 34 articulé sur la partie haute du coulisseau 30 et sur une patte 35 solidaire udit auvent 13.

Le panneau horizontal 15, qui prolonge la partie frontale du plancher 3 est soutenu par des glissières télescopiques 36 encastrées sous le plancher 3.

La figure 4 montre le véhicule en position repliée et en particulier ses moyens de commande. Le coffre 18 est basculé sur le plancher central 3; le plancher 19 dudit coffre constitue une paroi latérale verticale du véhicule prolongée par une bordure verticale 37 solidaire du toit 6. Le toit est en position abaissée sur le plancher du véhicule. Le panneau 15 prolongeant la partie frontale du plancher 3, est replié à la verticale et il est couvert par la bordure 38 de l'auvent 13. L'auvent est déployé au départ, manuellement, puis par le vérin 34. Il est maintenu en position repliée, grâce au vérin 34 et en particulier à la patte 35 qui permet, par le point d'articulation 39 du vérin sur cette dernière, de réaliser un verrouillage automatique de l'auvent en position fermée.

La figure 5 représente, de façon partielle, le toit 6 et l'auvent 13 étant enlevé, le dessus du véhicule. Le coffre 18 est en position basculée sur le plancher central 3. On distingue le vérin 32 de commande du coffre 18, disposé entre le montant 33 et le plancher 19 dudit coffre. Ce vérin se situe dans un plan vertical perpendiculaire à l'axe longitudinal du véhicule. Il est disposé dans l'épaisseur de la paroi verticale 4. Cette paroi verticale 4 renferme encore, dans son épaisseur, les coulisses 24 et 25 de guidage des coulisseaux 26 et 30 solidaires du toit 6. On distingue dans la coulisse 24 le vérin 40 qui actionne le coulisseau 26 et le coulisseau 30 au moyen du câble 29 convenablement guidé par les poulies 27 et 28 solidaires desdites coulisses 24 et 25. La bordure frontale de la paroi verticale 4 se termine par un montant 41 sur lequel est articulé le panneau latéral 9.

La forme en Vé des parois verticales 4 et 5 assure une bonne rigidification de la structure principale du véhicule. Telle qu'elle apparaît en détail, figure 5, la paroi 4 comporte une partie 42 disposée entre les montants 33 et 41; cette partie 42 est verticale, dans un plan incliné par rapport au grand axe longitudinal 43 du véhicule, pour donner une forme évasée à l'espace entre les parois 4 et 5. Au-delà du montant 33, la paroi 4 comporte une partie 44 verticale également mais dans un plan perpendiculaire à l'axe longitudinal 43 du véhicule. La longueur de la partie 44 est de l'ordre du quart de la largeur du plancher central 3; la longueur de la partie 42 est de l'ordre de la moitié de ladite largeur du plancher 3. Les parties 42 et 44 font entre elles un angle compris entre 15 et 30°, de l'ordre de 25° par exemple.

Le panneau 9 qui prolonge la paroi 4 est articulé sur le montant 41 de façon à prolonger la forme évasée de l'espace interne du véhicule, s'apparentant ainsi à une conque.

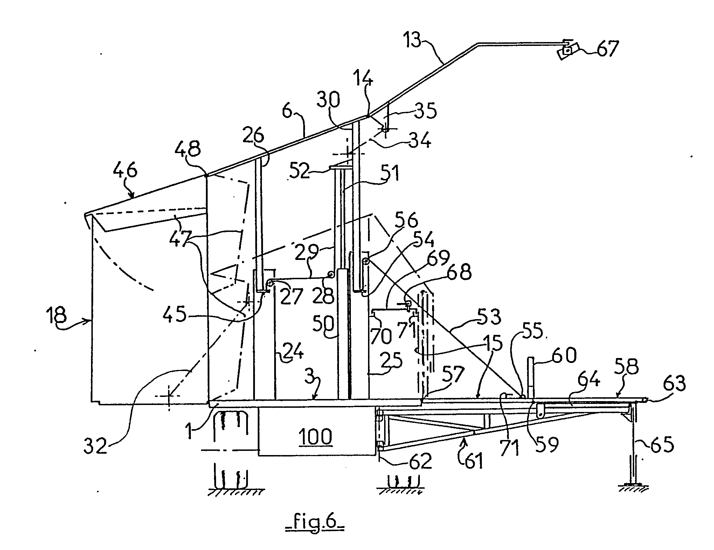

Le véhicule représenté fig. 6 comporte un plancher central 3 disposé sur le châssis 1 et surmonté d'un toit relevable 6 sur lequel est articulé en 14 un auvent 13. Le toit relevable 6 est soutenu par les poteaux télescopiques 24 et 25, comportant chacun, respectivement un coulisseau 26 et 30. Le mouvement conjugué des coulisseaux 26 et 30 permet de déplacer le toit 6, son auvent 13, et, en même temps, le panneau 46, qui constitue le toit du coffre 18. Ce panneau 46 comporte des prolongements latéraux 47 qui chevauchent les côtés 20 du coffre 18. Le toit 46 du coffre 18 est articulé en 48 sur le toit relevable 6. L'association du toit 46 du coffre 18 avec le toit relevable 6 permet de diminuer le poids dudit coffre 18; ce toit 46 associé au toit central 6 et à l'auvent 13, procure un meilleur équilibre de toute la partie couvrante du véhicule; en effet, les coulisseaux 26 et 30 se situent sensiblement de part et d'autre de la partie médiane longitudinale de toute la couverture. Par ailleurs, ce toit 46 avec ses côtés 47 permet d'accroître la hauteur du coffre 18; ce dernier est en effet limité par la largeur du véhicule puisqu'il se bascule à l'intérieur.

Le mouvement de cette couverture est obtenu au moyen d'un vérin 50 disposé entre les deux poteaux 24 et 25, de préférence contre le poteau 25. La tige 51 du vérin 50 entraîne le coulisseau 30 au moyen d'une patte latérale 52 disposée vers la partie supérieure dudit coulisseau 30. Le mouvement des coulisseaux 26 et 30 est conjugué, au moyen d'un câble 29, dont les extrémités sont solidaires, pour l'une, de la patte 52 du coulisseau 30 et pour l'autre, du pied 45 du coulisseau 26. Ce câble 29 circule entre une poulie 27 et une poulie 28, toutes deux disposées dans l'épaisseur de la paroi d'extrémité 4 du véhicule; le vérin 50 se situe entre la poulie 28 et le coulisseau 30.

Le mouvement de la couverture constituée du toit 6, de l'auvent 13, du toit 46 du coffre 18, est conjugué avec le mouvement du plancher 15 basculant, situé dans le prolongement, vers l'avant, du plancher central 3. Ce plancher basculant 15 est relié par l'intermédiaire d'un câble 53, au pied 54 du coulisseau 30; le câble 53 est relié de façon amovible à un crochet 55 disposé à l'extrémité avant et en bordure du plancher basculant 15. Le câble 53 est guidé au moyen d'une poulie 56 disposée à la partie supérieure du poteau 25. Le mouvement du coulisseau 30 permet le pivotement du plancher 15 autour de son axe d'articulation 57 sur le plancher central 3. On obtient ainsi une réduction de l'effort de relevage de la couverture, grâce au poids du plancher basculant 15.

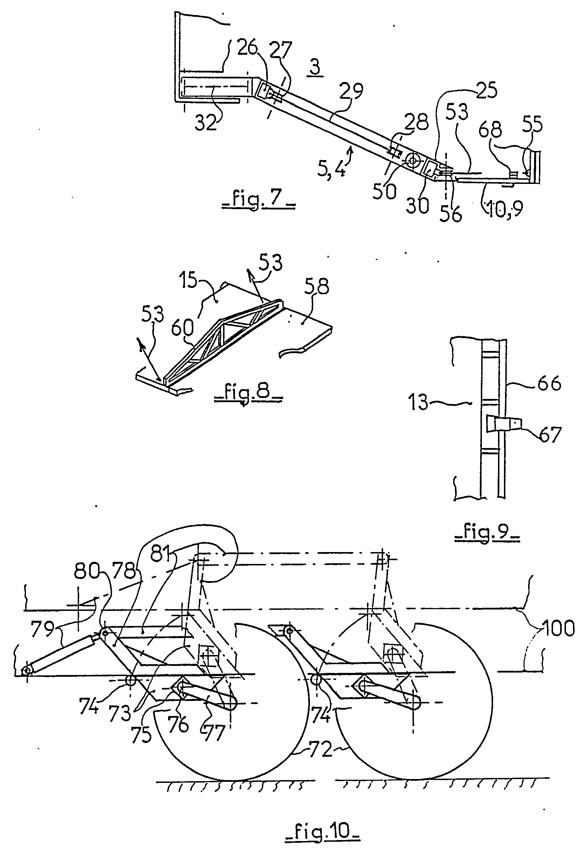

Ce plancher basculant 15 est de préférence, prolongé par un second panneau 58 de dimensions similaires à celles dudit plancher 15, pour obtenir une surface double déployée vers l'avant du plancher central 3. Ce panneau 58 est articulé en 59 sur le plancher 15; cette articulation 59 est parallèle à l'articulation 57 du plancher 15 sur le plancher central 3. On a représenté, figure 6 et figure 8, une structure complémentaire en forme de poutre 60 qui s'étend, sensiblement au niveau de l'articulation 59, sur toute l'étendue du plancher basculant 15. Cette structure reliée de point en point au plancher basculant 15, permet lors des manoeuvres dudit plancher, d'éviter le flambage au niveau de l'articulation 59 et ainsi d'éviter les à-coups dans sa mise en place pour le faire passer de la position verticale repliée représentée en traits mixtes fins, figure 6, à la position horizontale. Cette poutre 60 est démontée après mise en place du plancher 15 en position horizontale; elle peut également être conformée de façon à faire partie du plancher 15; dans ce cas, ledit plancher peut comporter une réservation permettant à ladite poutre de s'éclipser dans l'épaisseur dudit plancher, par un mouvement de pivotement par rapport à l'articulation 59.

Le plancher 15 et son panneau 58 de prolongement, sont soutenus par des bras 61 montés pivotants autour d'un axe 62 par rapport au soubassement 100 du châssis 1 du véhicule. Chaque bras 61 est repliable le long du châssis et verrouillable dans cette position repliée par des moyens appropriés. Ces bras 61 peuvent être simplement coulissants et se rétracter sous le plancher central 3. A l'extrémité de chaque bras 61 on trouve des moyens qui permettent de guider l'extrémité 63 du panneau 58, lors du mouvement de mise en place de cette partie du plancher. Ces moyens de guidage sont constitués d'un patin 64 qui permet de placer correctement le niveau du plancher 15 et de son panneau 58; ce patin 64 est fixé au bras 61 par des moyens appropriés, et il comporte, à son extrémité, un pied 65, réglable en hauteur. Le plancher 15 et son prolongement 58 sont supportés par plusieurs bras 61 judicieusement répartis; des bras pivotants et/ou des bras coulissants.

On a représenté figure 7, le détail des moyens de relevage du toit, disposés dans l'une des parois 4 et 5, situées à chaque extrémité du plancher central 3. On distingue dans ces parois, les coulisseaux 26 et 30 qui soutiennent la couverture du véhicule; le vérin 50 est situé à proximité du coulisseau 30 entre ce dernier et la poulie 28 de renvoi du câble 29. Cette poulie 28 est maintenue et guidée dans l'épaisseur de la paroi 4, 5 de même que la poulie de renvoi 27, située à proximité du coulisseau 26.

On remarque encore figure 7, la poulie de renvoi 56 du câble 53, lequel relie le coulisseau 30 au plancher relevable 15.

On a représenté, figure 9, l'extrémité de l'auvent 13. Cette extrémité comporte une rampe 66 sur laquelle peuvent avantageusement s'ancrer des accessoires divers comme par exemple des projecteurs 67.

Sur la figure 7, on a fait apparaître également, le panneau latéral 9, 10 articulé sur le poteau 25. Ce panneau latéral 10 obture l'espace entre le poteau 25, le plancher 15 une fois relevé, et l'auvent 13 en position repliée. Une fois relevé, le plancher 15 est verrouillé au moyen de la serrure 68 du panneau latéral 10. Cette serrure 68 immobilise une traverse amovible 69 qui relie le plancher 15 au poteau 25 au moyen, sur ce dernier, d'un ancrage 70 et, sur ledit plancher, d'un ancrage 71.

On remarque encore, sur la figure 6, en traits mixtes fins, les différentes positions prises notamment par les bordures latérales 47 du toit 46 du coffre 18. Lors de la manoeuvre de repliage complète du véhicule, on bascule tout d'abord le coffre 18 pour le ramener sur le plancher central 3. Lors de cette manoeuvre, le toit 46 prend une position verticale, suspendu par son articulation 48 au toit principal 6. Puis, lorsque l'ensemble de la couverture est descendu, le toit 46 occupe une position telle qu'il forme le panneau latéral du véhicule; les côtés 47 se situent sur les parois 4, 5 situées à chaque extrémité du plancher central 3.

La figure 10 représente le système de relevage du véhicule, d'une manière globale, au moyen de son ou de ses trains de roues 72. Les deux trains de roues sont montés sur le soubassement 100 du châssis 1. Chaque train de roues comporte un support 73 articulé par un axe 74 sur le soubassement 100. Ce support 73 prend normalement appui sous le soubassement 100, et il reçoit l'essieu 75 proprement dit, lequel renferme la barre de torsion 76 solidaire du bras de suspension 77 de la roue 72. Le support 73 comporte, au-dessus de l'axe d'articulation 74, un bras 78 qui commande son basculement sous l'effet du vérin de manoeuvre 79, interposé entre le soubassement 100 et l'extrémité supérieure 80 dudit bras 78. Dans le cas d'un double essieu, comme représenté figure 10, la commande peut s'effectuer au moyen d'un seul vérin 79 qui actionne les deux bras de commande 78 par un timon 81.

Des moyens complémentaires, non représentés, sont prévus pour verrouiller les bras de commande 78 et/ou les supports 73 d'essieux soit dans la position basse représentée en trait fort, soit dans la position haute représentée en traits mixtes fins.

Des moyens complémentaires procurant une plus grande sécurité dans la manoeuvre des éléments mobiles constitutifs du véhicule peuvent être prévus également. Ces moyens seront associés à une centrale hydraulique de manoeuvre des différents vérins à double effet et en particulier à un système électro-distributeur. Des contacts de sécurité réglant l'ordre des manoeuvres seront disposés de façon que le coffre 18 ne puisse basculer tant que le toit n'est pas complètement relevé et inversement.

La manoeuvre de déploiement s'effectue de préférence avec un boitier de commande à distance.

Par ailleurs, un tel véhicule présente l'avantage d'offrir, en position repliée, un volume important pour ranger sur la partie du plancher central 3 couverte par le coffre 18, les instruments et accessoires utilisés pour des spectacles, concerts ou autres.

## Revendications

1. Véhicule formant, à partir d'un châssis central allongé, un espace scénique développable en forme de conque, du type comportant un toit relevable (6) sur lequel est articulé un auvent (13) qui constitue, en position rabattue, au moins une partie de la paroi latérale du véhicule, caractérisé en ce qu'il comporte un coffre (18) articulé au niveau de l'arête longitudinale latérale du plancher central (3), constitué d'une paroi formant, lorsqu'il est rabattu sur ledit plancher central (3), une partie de la paroi latérale du véhicule opposée au côté de l'auvent (13) et, lorsqu'il est en position basculée de 90° par rapport à sa position de transport, rabattu sur ledit plancher central (3), le plancher (19) de la partie prolongeant latéralement ce plancher central (3).

2. Véhicule selon la revendication 1, caractérisé en ce que le coffre (18) comporte, en plus de sa partie constituant un prolongement du plancher central (3) quatre côtés (20 à 23) prolongeant et fermant latéralement les parois (4, 5) et le toit (6) de la partie centrale du véhicule.

3. Véhicule selon l'une quelconque des revendications 1 ou 2, caractérisé en ce que le coffre (18) est manoeuvré au moyen d'au moins un vérin (32), disposé entre le plancher (19) dudit coffre et le montant (33) intégré à l'une des parois (4, 5) de l'extrémité du plancher central (3) du véhicule.

4. Véhicule selon l'une quelconque des revendications 1 à 3, caractérisé en ce que les parois verticales (4 et 5) d'extrémité du véhicule, sont en forme de Vé, comprenant une partie (42) dans un plan incliné par rapport à l'axe longitudinal (43) du véhicule et une partie (44) dans un plan perpendiculaire audit axe (43).

5. Véhicule selon la revendication 4, caractérisé en ce que les parois verticales (4 et 5) se prolongent, dans la partie frontale du véhicule, par des panneaux (9 et 10), articulés sur le montant (41) disposé à l'extrémité du panneau (42) de la paroi (4 ou 5).

6. Véhicule selon la revendication 4, caractérisé en ce que les parties (42 et 44) d'au moins une des parois verticales (4 et 5) forment entre elles un angle compris entre 15 et 30°.

7. Véhicule selon l'une quelconque des revendications 1 à 6, caractérisé en ce que le relevage du toit (6) du véhicule s'effectue au moyen de vérins (40) agissant directement s'ur les coulisseaux (26) disposés à l'avant et à l'arrière du véhicule, et au moyen de câbles de traction (29) avec poulies (27, 28) de renvoi, qui réunissent les coulisseaux (26 et 30) soutenant, en parties avant et arrière, le toit (6) dudit véhicule.

8. Véhicule selon l'une quelconque des revendications 1 à 7, caractérisé en ce que la paroi latérale, du côté de l'auvent (13), entre ce dernier et le plancher central (3) est constituée d'un panneau (15) articulé sur l'arête longitudinale (16) dudit plancher central, formant un prolongement audit plancher central (3).

9. Véhicule selon l'une quelconque des revendications 1 à 6, caractérisé en ce qu'il comprend des moyens associant le relevage de la couverture du véhicule et le basculement de la paroi latérale, du côté de l'auvent (13), laquelle paroi latérale est constituée par le plancher avant (15) articulé sur le plancher central (3).

10. Véhicule selon la revendication 9, caractérisé en ce que le relevage de la couverture s'effectue au moyen d'un vérin (50) disposé dans chaque paroi latérale (4 et 5) à l'extrémité du plancher central (3), lequel vérin (50) est disposé entre les coulisseaux (26 et 30) des poteaux télescopiques (24 et 25) qui soutiennent, à chacune desdites extrémités, ladite couverture.

11. Véhicule selon la revendication 10, caractérisé en ce que la tige (51) du vérin (50), est solidaire d'une patte (52) disposée sur et à la partie supérieure du coulisseau (30) entraînant, dans son mouvement, un càble (53), disposé entre le pied (54) dudit coulisseau et un crochet (55) solidaire du plancher basculant (15), par l'intermédiaire d'une poulie de renvoi (56) positionnée au-dessus dudit pied (54) dans la partie supérieure du poteau (25).

12. Véhicule selon l'une quelconque des revendications 9 à 11, caractérisé en ce que le plancher (15) se prolonge par un panneau (58) articulé en (59), parallèlement à l'articulation (57) dudit plancher (15) sur le plancher central (3).

13. Véhicule selon la revendication 12, caractérisé en ce que le plancher (15) comporte, longitudinalement, au niveau de l'articulation (59), une poutre (60) fixée de façon amovible ou pivotante sur ladite articulation (59), pour renforcer ledit plancher lors de la manoeuvre de mise en place.

14. Véhicule selon la revendication 12, caractérisé en ce que le plancher avant (15, 58) est soutenu par une structure comprenant, d'une part, des bras (61) coulissant sous le châssis (1) et/ou articulés verticalement en (62) pour pouvoir être repliés, et, d'autre part, des patins (64) fixés sur lesits bras (61), au bout desquels sont disposés des pieds (65) réglables en hauteur.

15. Véhicule selon la revendication 10, caractérisé en ce que le mouvement des coulisseaux (26 et 30) est conjugué au moyen d'un câble (29) et de poulies de renvoi (27 et 28); l'une des extrémités dudit câble (29) est fixée à la patte (52), disposée à la partie supérieure du coulisseau (30), l'autre extrémité est solidaire du pied (45) du coulisseau (26).

16. Véhicule selon l'une quelconque des revendications 1 à 15, caractérisé en ce que le toit relevable (6) comporte, du côté opposé à l'auvent (13), un panneau complémentaire (46) servant de toit au coffre basculant (18), ce panneau complémentaire (46) est articulé en (48) sur le toit relevable (6) et il constitue la paroi latérale externe du véhicule lorsque le coffre (18) est en position basculée à l'intérieur du véhicule, sur le plancher central (3) et lorsque le toit (6) est ramené en position basse.

17. Véhicule selon l'une quelconque des revendications 1 à 16, caractérisé en ce que l'auvent (13) comporte, à son extrémité, une rampe (66) servant de support à des accessoires divers comme des projecteurs (67).

18. Véhicule selon l'une quelconque des revendications 1 à 17, caractérisé en ce que le plancher basculant (15) est verrouillé en position repliée, à chacune de ses extrémités, au moyen de la serrure (68) de chaque panneau latéral pivotant (9, 10) par l'intermédiaire d'une traverse amovible (69) interposée entre un ancrage (70) sur le poteau vertical (25) et un ancrage (71) sur ledit plancher (15).

19. Véhicule selon l'une quelconque des revendications 1 à 18, caractérisé en ce qu'il comporte un système de réglage de la hauteur de scène au moyen de supports (73) d'essieu basculant, commandé par vérin.

20. Véhicule selon l'une quelconque des revendications 1 à 19, caractérisé en ce qu'il comporte une centrale hydraulique de commande des vérins, un système électro-distributeur associé à des contacts de sécurité réglant l'ordre des manoeuvres.

**Patentansprüche**

1. Fahrzeug, welches ausgehend von einem gestreckten mittleren Fahrgestell einen Bühenraum bildet, der in Form einer Muschel abwickelbar ist, mit einem hochstellbaren Dach (6), an dem ein Vordach (13) gelenkig angebracht ist, welches in der umgelegten Position mindestens einen Teil der Seitenwand des Fahrzeuges bildet, dadurch gekennzeichnet, daß es einen Kasten (18) aufweist, der an der Längsseitenkante des mittleren Bodens (3) gelenkig angebracht ist, der von einer Wand gebildet ist, die, wenn der Kasten auf den mittleren Boden (3) umgelegt ist, einen Teil der Seitenwand des Fahrzeuges gegenüber der seite des Vordaches (13) bildet und, wenn der Kasten in einer um 90° bezüglich seiner Transportposition gekippten Position ist, auf den mittleren Boden (3) umgelegt ist, wobei der Boden (19) des Teils seitlich diesen mittleren Boden (3, verlängert.

2. Fahrzeug nach Anspruch 1, dadurch gekennzeichnet, daß der Kasten (18) zusätzlich zu seinem Teil, welcher eine Verlängerung des mittleren Bodens (3) bildet, vier Seiten (20 bis 23) aufweist, die seitlich die Wände (4, 5) und das Dach (6) des mittleren Teils des Fahrzeuges verlängern und schließen.

3. Fahrzeug nach einem der Ansprüche 1 oder 2, dadurch gekennzeichnet, daß der Kasten (18) mittels mindestens eines Stellantriebes (32) gesteuert wird, der zwischen dem Boden (19) des Kastens und dem Ständer (33) angeordnet ist, der in eine der Wände (4, 5) des Endes des mittleren Bodens (3) des Fahrzeuges integriert ist.

4. Fahrzeug nach einem der Ansprüche 1 bis 3, dadurch gekennzeichnet, daß die vertikalen Wände (4 und 5) des Fahrzeugendes Prismaform haben mit einem Teil (42) in einer bezüglich der Längsachse (43) des Fahrzeuges geneigten Ebene und einem Teil (44) in einer zu der Achse (43) senkrechten Ebene.

5. Fahrzeug nach Anspruch 4, dadurch gekennzeichnet, daß die vertikalen Wände (4 und 5) sich im Vorderteil des Fahrzeuges durch Platten (9 und 10) verlängern, die an dem Ständer (41), der am Ende der Platte (42) der Wand (4 oder 5) angeordnet ist, gelenkig angebracht sind.

6. Fahrzeug nach Anspruch 4, dadurch gekennzeichnet, daß die Teile (42 und 44) mindestens einer der vertikalen Wände (4 und 5) zwischen sich einen Winkel von zwischen 15 und 30° bilden.

7. Fahrzeug nach einem der Ansprüche 1 bis 6, dadurch gekennzeichnet, daß das Heben des Daches (6) des Fahrzeuges mittels Stellantrieben (40) erfolgt, welche direkt auf die Gleitstücke (26) wirken, die vor und hinter dem Fahrzeug angeordnet sind, sowie mittels Zugkabeln (29) mit Leitrollen (27, 28), die die Gleitstücke (26 und 30) verbinden, welche das Dach (6) des Fahrzeuges vorn und hinten unterstützen.

8. Fahrzeug nach einem der Ansprüche 1 bis 7, dadurch gekennzeichnet, daß die Seitenwand auf der Seite des Vordaches (13) zwischen letzterem und dem mittleren Boden (3) von einer Platte (15) gebildet ist, die an der Längskante (16) des mittleren Bodens gelenkig angebracht ist, wobei eine Verlängerung am mittleren Boden (3) gebildet ist.

9. Fahrzeug nach einem der Ansprüche 1 bis 6, dadurch gekennzeichnet, daß es Mittel zum Verbinden des Hebens der Fahrzeugabdeckung und des Kippens der Seitenwand am Vordach (13) aufweist, wobei die Seitenwand durch den Vorderboden (15) gebildet ist, der an dem mittleren Boden (3) gelenkig angebracht ist.

10. Fahrzeug nach Anspruch 9, dadurch gekennzeichnet, daß das Heben der Abdeckung mittels eines Stellantriebes (50) erfolgt, der auf jeder seitenwand (4 und 5) am Ende des mittleren Bodens (3) angeordnet ist, wobei der Stellantrieb (50) zwischen den Gleitstücken (26 und 30) von Teleskoppfosten (24 und 25) angeordnet ist, die an jeder dieser Enden die Abdeckung unterstützen.

11. Fahrzeug nach Anspruch 10, dadurch gekennzeichnet, daß der Schaft (51) des Stellantriebes (50) formschlüssig mit einer Krempe (52) verbunden ist, die auf dem oberen Teil des Gleitstückes (30) und an diesem angeordnet ist, welches bei seiner Bewegung mittels einer Leitrolle (56) ein Kabel (53) mitnimmt, das zwischen dem Fuß (54) des Gleitstückes und einem Haken (55) angeordnet ist, der formschlüssig mit dem Kippbaren Boden (15) verbunden ist, wobei die Leitrolle (56) über dem Fuß (54) in dem oberen Teil des Pfostens (25) angeordnet ist.

12. Fahrzeug nach einem der Ansprüche 9 bis 11, dadurch gekennzeichnet, daß sich der Boden (15) durch eine Platte (58) verlängert, die schwenkbar bei (59) parallel zu dem Gelenk (57) des Bodens (15) an dem mittleren Boden (3) angebracht ist.

13. Fahrzeug nach Anspruch 12, dadurch gekennzeichnet, daß der Boden (15) längs am Gelenk (59) einen Träger (60) aufweist, der lose oder schwenkbar an dem Gelenk (59) befestigt ist, um den Boden zu verstärken, während er in Stellung gebracht wird.

14. Fahrzeug nach Anspruch 12, dadurch gekennzeichnet, daß der Vorderboden (15, 58) durch einen Aufbau unterstützt ist, der einerseits Arme (61) aufweist, die unter dem Fahrgestell (1) gleiten und/oder bei (62) schwenkbar angebracht sind, um zurückgeklappt werden zu können, und andererseits Kufen (64) aufweist, die an den Armen (61) befestigt sind, an deren Enden Füße (65) angebracht sind, die in der Höhe vestellbar sind.

15. Fahrzeug nach Anspruch 10, dadurch gekennzeichnet, daß die Bewegung der Gleitstücke (26 und 30) mittels eines Kabels (29) und Leitrollen (27 und 28) verbunden sind, wobei eines der Enden des Kabels (29) an der Krempe (52) befestigt ist, die am oberen Teil des Gleitstückes (30) angeordnet ist, das andere Ende formschlüssig mit dem Fuß (45) des Gleitstückes (26) verbunden ist.

16. Fahrzeug nach einem der Ansprüche 1 bis 15, dadurch gekennzeichnet, daß das hochstellbare Dach (6) auf der Seite gegenüber dem Vordach (13) eine komplementäre Platte (46) aufweist, die als Dach für den kippenden Kasten (18) dient, wobei die komplementäre Platte (46) bei (48) an dem hochstellbaren Dach (6) schwenkbar angebracht ist und die äußere Seitenwand des Fahrzeuges bildet, wenn der Kasten (18) in gekippter Stellung im Inneren des Fahrzeuges, auf dem mittleren Boden (3) ist und wenn das Dach (6) in die untere Position zurückgebracht ist.

17. Fahrzeug nach einem der Ansprüche 1 bis 16, dadurch gekennzeichnet, daß das Vordach (13) an seinem Ende eine Rampe (66) aufweist, die als Stütze für diverses Zubehör dient, wie Projektoren (67).

18. Fahrzeug nach einem der Ansprüche 1 bis 17, dadurch gekennzeichnet, daß der kippende Boden (15) an jedem seiner Enden in zurückgefalteter Position verriegelt ist, was mittels des Verschlusses (68) jeder seitenplatte (9, 10) erfolgt, die mittels einer losen Traverse (69) schwenkt, die zwischen einer Verankerung (70) an dem vertikalen Pfosten (25) und einer Verankerung (71) an dem Boden (15) angeordnet ist.

19. Fahrzeug nach einem der Ansprüche 1 bis 18, dadurch gekennzeichnet, daß es ein Steuersystem für die Höhe der Bühne mittels kippender Achsstützen (73) mit Steuerung durch Stellantrieb aufweist.

20. Fahrzeug nach einem der Ansprüche 1 bis 19, dadurch gekennzeichnet, daß es eine zentrale Steuerhydraulik für die Stellantriebe und ein Elektroverteilungssystem aufweist, welches sicherheitskontakten zugeordnet ist, welche die Reihenfolge der Betätigungen steuern.

**Claims**

1. Vehicle forming, from a central elongate chassis, a stage-space spreadable into a conch shape, of the type comprising a tip-up roof (6) to which is hinged an awning (13) which constitutes, in the folded-down position, at least one part of the lateral wall of the vehicle, characterized in that it comprises a boot (18) hinged at the lateral longitudinal edge of the central floor (3), constituted from a wall forming, when it is folded down on the said central floor (3), one part of the lateral wall of the vehicle opposite the side of the awning (13) and, when it is in a position tilted by 90° relative to its travelling position, folded down on the said central floor (3), the floor (19) of the part laterally extending this central floor (3).

2. Vehicle according to Claim 1, characterized in that the boot (18) comprises, in addition to its part constituting an extension of the central floor (3), four sides (20 to 23) extending and closing laterally the walls (4, 5) and the roof (6) of the central part of the vehicle.

3. Vehicle according to either of Claims 1 or 2, characterized in that the boot (18) is manoeuvred by means of at least one jack (32), disposed between the floor (19) of the said boot and the upright (33) integrated with one of the walls (4, 5) of the end of the central floor (3) of the vehicle.

4. Vehicle according to any one of Claims 1 to 3, characterized in that the vertical end-walls (4 and 5) of the vehicle, are V-shaped, comprising one part (42) in a plane inclined relative to the longitudinal axis (43) of the vehicle, and one part (44) in a plane perpendicular to the said axis (43).

5. Vehicle according to Claim 4, characterized in that the vertical walls (4 and 5) are extended, in

EP 0 269 518 B1

the frontal part of the vehicle, by panels (9 and 10), hinged to the upright (41) disposed at the end of by panel (42) of the wall (4 or 5).

6. Vehicle according to Claim 4, characterized in that the parts (42 and 44) of at least one of the vertical walls (4 and 5) form between them an angle lying between 15 and 30°.

7. Vehicle according to any one of Claims 1 to 6, characterized in that the tipping-up of the roof (6) of the vehicle is performed by means of jacks (40) acting directly on the slide-bars (26) disposed at the front and at the rear of the vehicle, and by means of tension cables (29) with return pulleys (27, 28), which link up the slide-bars (26 and 30) supporting, at the front and rear parts, the roof (6) of the said vehicle.

8. Vehicle according to any one of Claims 1 to 7, characterized in that the lateral wall, on the side of the awning (13), between the latter and the central floor (3) is constituted from a panel (15) hinged to the longitudinal edge (16) of the said central floor, forming an extension to the said central floor (3).

9. Vehicle according to any one of Claims 1 to 6, characterized in that it comprises means linking the tipping-up of the cover of the vehicle and the tilting of the lateral wall, on the side of the awning (13), which lateral wall is constituted by the front floor (15) hinged to the central floor (3).

10. Vehicle according to Claim 9, characterized in that the tipping-up of the cover is performed by means of a jack (50) disposed in each lateral wall (4 and 5) at the end of the central floor (3), which jack (50) is disposed between the slide-bars (26 and 30) of the telescopic poles (24 and 25) which support the said cover at each of the said ends.

11. Vehicle according to Claim 10, characterized in that the shaft (51) of the jack (50) is integral with a bracket (52) disposed on and at the upper part of the slide-bar (30) driving, in its movement, a cable (53) disposed between the foot (54) of the said slide-bar and a hook (55) integral with the tilting floor (15), by way of a return pulley (56) positioned above the said foot (54) in the upper part of the pole (25).

12. Vehicle according to any one of Claims 9 to 11, characterized in that the floor (15) is extended by a panel (58) hinged at (59), parallel with the hinge (57) of the said floor (15), to the central floor (3).

13. Vehicle according to Claim 12, characterized in that the floor (15) comprises longitudinally, at the level of the hinge (59), a girder (60) fixed detachably or pivoting on the said hinge (59), in order to strengthen the said floor during the positioning manoeuvre.

14. Vehicle according to Claim 12, characterized in that the front floor (15, 58) is supported by a structure comprising, on the one hand, arms (61) sliding under the chassis (1) and/or hinged vertically at (62) in order to be able to be folded up, and, on the other hand, baseplates (64) fixed to the said arms (61), at the end of which are disposed height-adjustable feet (65).

15. Vehicle according to Claim 10, characterized in that the movement of the slide-bars (26 and 30) is coupled by means of a cable (29) and return pulleys (27 and 28); one of the ends of the said cable (29) is fixed to the bracket (52) disposed at the upper part of the slide-bar (30), the other end is integral with the foot (45) of the slide-bar (26).

16. Vehicle according to any one of Claims 1 to 15, characterized in that the tip-up roof (6) comprises, on the side opposite the awning (13), an additional panel (46) serving as a roof for the tilting boot (18), this additional panel (46) is hinged at (48) to the tip-up roof (6) and it constitutes the external lateral wall of the vehicle when the boot (18) is in the tilted position inside the vehicle, on the central floor (3), and when the roof (6) is returned to the low position.

17. Vehicle according to any one of Claims 1 to 16, characterized in that the awning (13) comprises, at its end, a ramp (66) serving as a support for various accessories such as projectors (67).

18. Vehicle according to any one of Claims 1 to 17, characterized in that the tilting floor (15) is locked in the folded-up position, at each of its ends, by means of the lock (68) of each lateral pivoting panel (9, 10) by way of a detachable crosspiece (69) interposed between an anchorage (70) on the vertical pole (25) and an anchorage (71) on the said floor (15).

19. Vehicle according to any one of Claims 1 to 18, characterized in that it comprises a system for setting the stage height by means of jack-controlled tilting axle supports (73).

20. Vehicle according to any one of Claims 1 to 19, characterized in that it comprises an hydraulic power supply for controlling the jacks and an electricity distribution system linked to safety contacts setting the order of the manoeuvres.

PL. 1/5

_fig.1_

_fig.2_

_fig.3_

_fig.4_

_fig. 5_

_Fig.6_

EP 0 269 518 B1

_fig. 7_

_fig.8_

_fig.9_

_fig.10_